# EUROPEAN PATENT APPLICATION

(11) **EP 0 728 950 A1**
(43) Date of publication of application: **28.08.1996**
(21) Application number: 96301083.0
(22) Date of filing: 16.02.1996
(51) Int. Cl.: F16B 19/05

(54) **Method of securing members together and fastener therefor**

(30) Priority: 24.02.1995 GB 9503747
(71) Applicant: AVDEL TEXTRON LIMITED, Welwyn Garden City, Herts. AL7 1EZ (GB)
(72) Inventor: Brewer, Jonathan Lee, Dunstable, Bedfordshire (GB); Denham, Keith, Welwyn Garden City, Hertfordshire (GB); Sherry, Neil James, Stevenage, Hertfordshire (GB); Warr, Graham, Henlow, Bedfordshire (GB); Williams, Roger Andrew, Watford, Hertfordshire (GB)
(74) Representative: Treacher, Alan Leslie

(57) **Abstract**

A fastener comprises a pin having a head 14 and swaging grooves 16 on its shank, together with a collar 12 which is swaged into the groove 16 to lock the collar to the pin and thereby secure together two metal sheets 23, 24. The underhead face of the pin head is formed with a projecting annular rib 28. When the pin head is urged towards the adjacent sheet 24 during the fastener installation process, the rib 28 enters the sheet 24 and engages therewith. This enhances resistance to relative slipping of the sheet 24 with respect to the pin and the other sheet 23, thereby enabling the use of an oversize hole 26 in the sheet 24. The collar 12 may alternatively or additionally be provided with a similar rib 29 for a similar purpose (Figure 1).

## Description

The invention relates to a method of securing members together. In particular, it relates to securing members together so as to enhance resistance to relative slipping. It also relates to a fastener which is particularly adapted to be employed in such a method.

It is common practice to secure members, for example metal panels, together by means of fasteners such as nuts and bolts, or rivets. In essence, the fastener comprises a shank, which is passed through superposed apertures or holes in the members, and a preformed head at one end of the shank. The preformed head abuts one face of the members, and a second head is provided at the other end of the shank. The second head is urged towards the preformed head (e.g. by screwing the nut along the bolt, or by deforming the projecting part of the rivet shank) so that the members are clamped together between the two heads. It is relatively easy to develop tension in the fastener shank, so as to hold the members in contact with each other.

However it is also commonly a requirement that the members be firmly restrained against slipping relative to each other in a direction parallel to their own planes. In practice this is not so easy to achieve. It could be achieved by making the holes in the members a tight fit on the shank of the fastener, so that there is no gap between the shank of the fastener and the wall of each hole. However it is not easy to provide this, at least under the conditions which prevail in current manufacturing methods. Holes in members such as metal panels are normally made by punching each panel separately, instead of, for example, by drilling the holes at a single pass after the panels have been assembled in contact with each other. Tolerances in hole size have to be allowed to accomodate inaccuracies in the diameter and positions of the punched holes, and in the relative position of the panels on assembly together. Furthermore, it may be required that the hole in the front panel (i.e. the one nearer the assembly operator) is larger than the hole in the rear panel (i.e. the one further away from the assembly operator), to further facilitate alignment of the holes, and to assist the assembly operator in aligning the holes by visual inspection. Again, it is usually desirable or necessary that both holes are of somewhat larger diameter than the shank of the fastener to be used, to facilitate insertion of the fastener shank into and through the holes. Hence in practice the holes through the members will be oversize to the fastener shank.

Thus if after securing together in this way the members are pulled in opposite senses along a direction parallel to their plane of contact, the only force initially opposing relative movement is the frictional force between the members developed as a result of the compression between the fastener heads, supported by the tension in the fastener shank. In practice this frictional force is limited in strength, so that the resistance of the members to initial relative slip is low. It does not matter that the distance of initial slip is small, and that the resistance to further slip (when the members hole walls are in contact with opposite sides of the fastener shank) is thereafter much higher. The initial slip is not acceptable.

The present invention is intended to overcome this problem, by increasing the resistance to such initial slip.

The invention provides, in one of its aspects, a method of securing together two members with superposed apertures, which method comprises the steps of: -
inserting the shank of a pin-and-swaged-collar fastener through the superposed apertures so that the underhead face of the pin faces towards one face of one of the members;
positioning over the protruding stem of the pin on the other side of the members a swageable collar so that one end face of the collar faces towards the other member;
at least one of the underhead face of the pin and the aforesaid one end face of the collar being provided with at least one projection which is harder than the member which it abuts;
urging the head of the pin and the collar towards each other with sufficient force that the or each projection enters the member which it abuts and engages therewith, thereby to enhance resistance to relative slipping movement of the members;
and swaging the collar to the pin.

The entry of the or each projection into the member, and the swaging of the collar to the pin, may overlap, at least to some extent.

The invention provides, in another of its aspects, a fastener of the pin-and-swaged-collar type for securing together two members, in which fastener at least one of the underhead face of the pin and one end face of the collar is provided with at least one projection, whereby when the fastener is used to secure together members, at least the one of which in contact with the fastener part bearing the projection is of lesser hardness than the projection, and the collar is urged towards the head of the pin with sufficient force, the projection enters the member and engages therewith;

so that after the projection has entered the member and the collar has been swaged to the pin, the members are thereby secured together with an enhanced resistance to relative slipping movement.

Preferably the projection or at least one of the projections is annular in form.

Preferably both the underhead of the pin and an end of the collar are provided with at least one projection.

A specific embodiment of the invention wil now be described by way of example and with reference to the accompanying drawings, in which: -
Figure 1 is a longitudinal section through a pin-and-collar fastener, with the pin partially inserted through superposed apertures in members to be secured together thereby, and the collar initially offered over the end of the pin;
Figure 2 is an end elevation of the pin taken from the end remote from the head;
Figure 3 is an end elevation of the collar, taken from the end which will contact members to be secured; and
Figure 4 is similar to Figure 1 but shows the finished joint with the collar swaged to the pin.

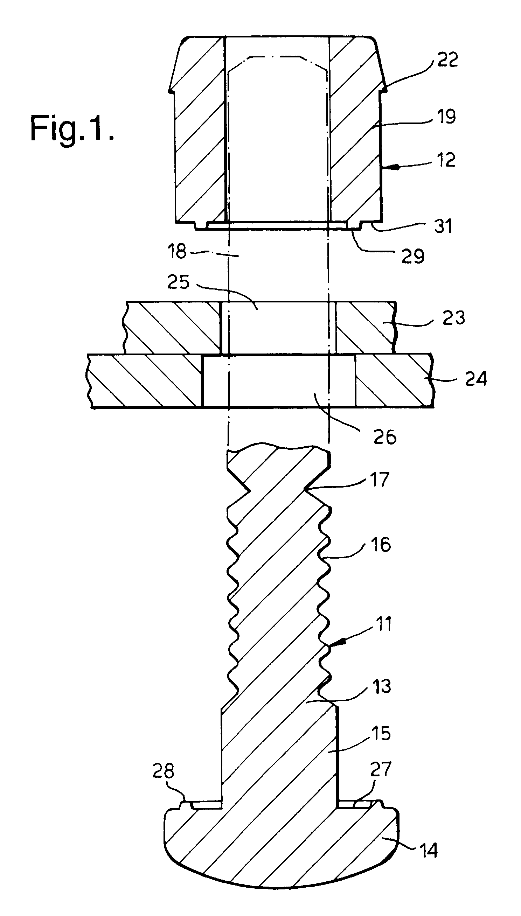

Referring first to Figures 1, 2 and 3, the fastener comprises a pin 11 and collar 12. The pin comprises an elongated shank 13 with an enlarged head 14 at one end. The shank comprises a plain cylindrical portion 15 adjacent the head 14, followed by a portion formed with annular swaging grooves 16. Then comes a breakneck 17, which is the weakest part of the shank. On the other side of the breakneck, the shank comprises a pintail 18 (shown in chain-lines in Figure 1 for clarity of illustration), which carries gripping grooves for ready engagement with the jaws of a fastener placing tool. In this example the pin 11 is made of steel of hardness about 250Hv, with a shank diameter of about 9.6mm.

The collar 12 is essentially cylindrical in form and annular in cross-section, having a wall 19 surrounding a central bore 21, which is slightly larger in diameter than the pin shank. That end of the collar which, when the collar is assembled onto the shank of the pin, will be remote from the pin head and nearer the fastener installation tool, is formed with a slightly tapered boss 22 which is shaped to cooperate with the annular swaging anvil of the tool. The collar is made of steel of hardness about 180Hv, i.e. slightly softer than the pin.

As thus far described, the fastener is identical with that known generically as a lockbolt, an example of which well known and commercially available under the Registered Trademark AVDELOK.

In this example, the fastener is used to secure together two members in the form of aluminium sheets 23, 24, of hardness about 100-110Hv, type 6082. The rear sheet 23 has a circular hole 25 which is a close fit on the cylindrical portion 15 of the pin, but the front sheet 24 has a circular hole which is of larger diameter, for reasons of assembly tolerance as previously mentioned.

In this example, the underhead face 27 of the pin head, which is otherwise flat, is formed with a projection in the form of an annular rib 28. Similarly, the end face 31 of the collar, remote from the boss 22, is formed with a projection in the form of an annular rib 29. Each annular rib has a height of about 0.25mm and a width of about 0.51mm at its base. Its side walls taper inwardly slightly, as illustrated in Figure 1. The outer edges of the rib may be radiussed, up to about 0.13mm radius. This radius dimension is appropriate to a fastener with a pin diameter of 9.6mm, and may be increased for a pin of larger diameter or decreased for a pin of smaller diameter.

Alternatively, if it is found that a rib with sharp edges or with edges of such a radius as mentioned above causes unacceptably high stress concentrations in the sheet into which the rib enters (as will be described below), then the radius may be made larger. The whole of the end face of the rib, which initially contacts the sheet, may be made convexly curved in cross-section. The radius of curvature may vary across the section of the end face i.e. from its radially inner side to its radially outer side.

As illustrated in Figure 1, the lockbolt of this example is installed in the usual way. The pin shank is inserted through the superposed holes 26, 25, and the collar 12 assembled over the protruding pintail 25, with the end 31 carrying the rib 29 leading and facing towards the sheet 23 and pin head 14. The pin is advanced until the rib 28 contacts the front sheet 24, and the collar 12 is advanced until the rib 29 contacts the back sheet 23.

The lockbolt is then installed using a conventional and well-known lockbolt placing tool (not shown in the drawings). This comprises essentially an annular anvil for receiving the boss end of the collar 12, grooved jaws for gripping the grooved exterior of the pintail 25 which protrudes beyond the annular anvil, and power means (usually hydraulically operated) for retracting the jaws with respect to the anvil with progressively increasing force. This has the effect of urging the collar and pin head towards each other with progressively increasing force.

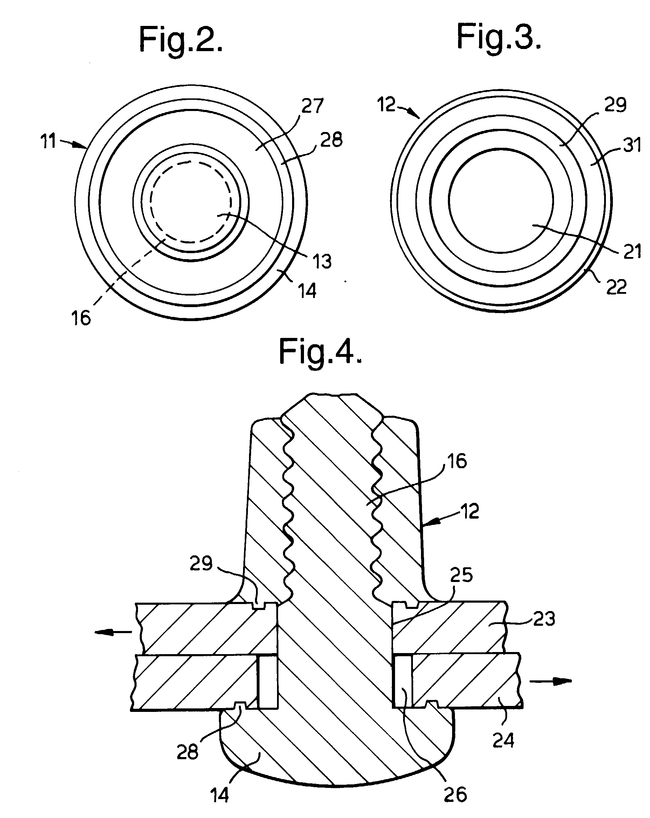

As force increases the two ribs 28, 29 locally deform the adjacent part of each sheet with which they are in contact. Each rib enters the sheet, so that the flat face behind each rib contacts the sheet surface as illustrated in Figure 4. Futher increase of the force exerted by the tool makes the collar deform radially inwardly in the usual way, so that the material of the collar engages in the locking grooves 16 and locks the collar to the pin, as illustrated in Figure 4. The action of the rib entering the sheet may overlap the deformation of the collar into the locking grooves, at least to some extent. Indeed, it would be possible for the rib to enter the sheet after the swaging has been completed, by a suitable design of collar and tool anvil. The order of these two steps, and/or their degree of overlap, is immaterial to the present invention, which includes all such variations. Further increase of the force applied to the pintail causes the shank to break at the breakneck 17, leaving the lockbolt installed in the sheets and securing them together, as illustrated in Figure 4.

It will be appreciated that, if relative force is applied to the two sheets, in opposite directions as indicated by the arrows in Figure 4, to try to make the sheets slip along their contact plane, the engagement of the underhead rib 28 into the front sheet 24 will substantially increase the resistance to such slipping. Similarly, the engagement of the collar rib 29 into the rear sheet 23 will allow the rear sheet hole 25 to be larger in diameter than the pin shank eylindrical portion 15, whilst maintaining enhanced resistance to slip.

The invention is not restricted to the details of the foregoing example. For instance, in the case illustrated in this example, where the hole in one of the sheets is a close fit on the pin, the fastener part in contact with that face need not be provided with a projection. Conversely, providing projections on both fastener parts enables the holes in both sheets to be oversize to the pin shank.

A projection may be of form other than annular, e.g. a plurality of radial projections. More than one projection may be provided on one or both fastener parts.

## Claims

1. A method of securing together two members (23, 24) with superposed apertures, (25, 26) which method comprises the steps of: -
inserting the shank (13) of a pin-and-swaged-collar fastener through the superposed apertures (25, 26) so that the underhead face (27) of the pin (11) faces towards one face of one (24) of the members;
positioning over the protruding shank (13) of the pin on the other side of the members (25, 26) a swageable collar (12) so that one end face (31) of the collar (12) faces towards the other member (23);
characterized in that at least one of the underhead face (27) of the pin (11) and the aforesaid one end face (31) of the collar (12) is provided with at least one projection (28 or 29) which is harder than the member (23 or 24) which it abuts;
and the method further comprises the steps of urging the head of the pin (11) and the collar towards each other with sufficient force that the or each projection (28 or 29) enters the member (23 or 24) which it abuts and engages therewith, thereby to enhance resistance to relative slipping movement of the members (23, 24);
and swaging the collar (12) to the pin (11).

2. A method as claimed in Claim 1, in which the steps of the entry of the or each projection (28 or 29) into the member (23 or 24), and the swaging of the collar (12) to the pin (11), overlap at least to some extent.

3. A fastener (11, 12) of the pin-and-swaged-collar type for securing together two members (23, 24), characterized in that at least one of the underhead face (27) of the pin (11) and one end face (31) of the collar (12) is provided with at least one projection (28 or 29),
whereby when the fastener is used to secure together members (23, 24), at least the one of which in contact with the fastener part bearing the projection (28 or 29) is of lesser hardness than the projection, and the collar (12) is urged towards the head (14) of the pin (11) with sufficient force, the projection (28 or 29) enters the member and engages therewith;
so that after projection (28 or 29) has entered the member (23 or 24) and the collar has been swaged to the pin, the members (23, 24) are thereby secured together with an enhanced resistance to relative slipping movement.

4. A method as claimed in Claim 1 or Claim 2 or a fastener as claimed in Claim 3, in which the projection (28 or 29) or at least one of the projections (28, 29) is annular in form.

5. A method as claimed in Claim 1 or Claim 2 or Claim 4 or a fastener as claimed in Claim 3 or Claim 4, in which both the underhead face (27) of the pin (11) and an end face (31) of the collar (12) are provided with at least one projection (28 or 29).
